# EUROPEAN PATENT SPECIFICATION

(11) **EP 1 117 727 B1**
(45) Date of publication and mention of the grant of the patent: **07.07.2004**
(21) Application number: 99954681.5
(22) Date of filing: 28.09.1999
(51) Int. Cl.: C08G 77/388, C08G 77/46, C08G 65/02

(54) **ORGANOSILOXANE CONTAINING MODIFIED GROUPS IN PESTICIDAL COMPOSTIONS**
MODIFIZIERTE GRUPPEN ENTHALTENDES ORGANOSILOXAN IN PESTIZIDZUSAMMENSETZUNGEN
ORGANOSILOXANE CONTENANT DES GROUPES MODIFIES DANS DES COMPOSITIONS DE PESTICIDES

(30) Priority: 28.09.1998 US 102039 P
(43) Date of publication of application: 25.07.2001
(73) Proprietor: General Electric Company, Schenectady, New York 12345 (US); Policello, George A., Ossining, NY 10562 (US)
(72) Inventor: POLICELLO, George, A., Ossining, NY 10562 (US); CZECH, Anna, Cortlandt Manor, NY 10566 (US); BURGAZLI, Jack, Cardington, OH 43315 (US)
(74) Representative: Wibbelmann, Jobst, Dr., Dipl.-Chem.
(86) International application number: PCT/US1999/022490
(87) International publication number: WO 2000/018825

(56) References cited:
- EP-A- 0 404 698
- EP-A- 0 535 596
- WO-A-97/32475
- DATABASE WPI Week 198332 Derwent Publications Ltd., London, GB; AN 1983-732235 XP002129810 & JP 58 111893 A (DAIICHI KOGYO SEIYAKU CO. LTD.)

## Description

### Background of the Invention

Many pesticides require the addition of an adjuvant to the spray mixture to provide wetting and spreading on foliar surfaces. Often that adjuvant is a surfactant, which can perform a variety of functions, such as increasing spray droplet retention on difficult to wet leaf surfaces, or to provide penetration of the herbicide into the plant cuticle. These adjuvants are provided either as a tankside additive or used as a component in pesticide formulations.

Gaskin, *et al., (Pestic. Sci.* 1993, **38,** 185-192) demonstrated that some trisiloxane ethoxylates (TSE), such as Silwet L-77® surfactant (available from Witco Corp. of Greenwich, CT), can antagonize cuticular penetration of a herbicide into grasses, when compared to the herbicide alone. The term antagonism is used to indicate that the treatment of herbicide plus adjuvant is less effective than the comparative herbicide treatment.

Sandbrink, *et al.,* (Pest. Sci. 1993, **38**, 272-273) published that a TSE antagonized glyphosate performance relative to glyphosate alone in the control of *Panicum maximum* Jacq. Snow, *et. al.*, Langmuir, 1993, **9**, 424-30, discusses the physical properties and synthesis of novel cationic siloxane surfactants. These siloxanes are based on the reaction of a chloropropyl modified trisiloxane with an alkanolamine, such as N-methylethanolamine, which was further reacted with a halide to make a quaternary surfactant.

Petroff, *et al.*, (EP 92116658) describes the use of cationic, quaternary trisiloxanes to enhance the efficacy of glyphosate on velvetleaf, a broadleaf weed. Henning, *et al.,* (DE4318537) describes cationic siloxanyl modified polyhydroxy hydrocarbon or carbohydrate for use with plant protection agents. These compounds are derived from a saccharide containing 1 to 10 pentose and/or hexose units, modified with a quaternary ammonium group, and a siloxane moiety. Reid, *et al.*, (USP 3,389,160) describes amino modified siloxane alkoxylates where the amino functionality appears as the terminal group on the alkyleneoxide moiety, opposite the siloxane group. Policello in PCT WO 97/32475 discloses amino modified siloxanes wherein the amine is bound by an ether bond to the siloxane backbone wherein the amine may be terminal or pendant to the backbone.

Dietz et al. in US Patent No. 5,891,977 describes organopolysiloxanes comprising polyhydroxyorganyl radicals and polyalkylene radicals, their process and use. Specifically these materials are describes as being useful in coatings, paints and inks, as well as emulsifiers for water-in-oil and oil-in-water systems, such as hair care formulations. Although these materials are mentioned as being practical for many applications, these were not shown to have utility as adjuvants for pesticidal applications.

### Summary of the Invention

Organosiloxanes for use with pesticidally active compositions and those with utility in pesticide formulations to treat plants and animals are those substituted with at least one aminealkoxylate group, which are novel siloxane structures. Intermediates for the manufacture for said siloxane are also disclosed herein.

### Detailed Description of the Invention

The amino alkoxylate organosiloxanes described herein are useful as adjuvants for pesticide formulations, including but not limited to applications which may be used to treat plants or animals. The pesticidal formulations include (a) at least one modified organosiloxane; and (b) at least one pesticidally active component, but may contain optional ingredients.

### (A) ORGANOSILOXANES

Preferably, the modified organosiloxanes of the present invention have the average general formula:

[SiO_{4/2}]_{d}[MeSiO_{3/2}]ₑ[O_{½}MeSi(Q)O_{½}]_{f}[O_{½}SiMe₂Q]_{g} (I)

wherein f is between 0 to 50, preferably 1 to 5, more preferably 1 to 2, most preferably 1, d = 0 to 2, most preferably 0, e = 0 to 3, most preferably 0, if the siloxane is not cyclic, g = 2 + e + 2d, and if the siloxane is cyclic g = 0 and f ≥ 1, e+d+f+g = 2 to 50 if the siloxane is non-cyclic and = 4 to 8 if the siloxane is cyclic and Q is either an amino alkoxylate of the formula -BN[BO(CₐH₂ₐO)_{b}R¹]_{2-z}T_{z} or R², with at least one Q not being R², each a is 2 to 4, preferably 2 to 3, each b is 2 to 15, preferably 2 to 8, each B is a divalent bridging group of up to C8, preferably C3 to C4, each optionally OH substituted, z = 0 to 1, preferably 0, R¹ is hydrogen or a hydrocarbon radical of 1 to 4 carbons, R² is either a polyether of the structure -BO(CₐH₂ₐO)_{c}R¹, hydrogen, an alkyl radical containing 1 to 18 carbons, preferably methyl, c is 0 to 15, and T is a univalent organic moiety.

Preferably most R² groups are methyl, but some may be polyethers of the structure -B(CₐH₂ₐO)_{b}R¹ as defined above, e.g., -C₃H₆(C₂H₄O)₈OH and -C₃H₆(C₂H₄O)₆(C₃H₆O)₂OCH₃. Exemplary B are -(CH₂)₂-, -(CH₂)₃-, and -CH₂CH(OH)CH₂- and -CH₂C₆H₉(OH)CH₂-. Examples of R¹ are -H, and -CH₃. Most preferably all Q groups which are terminal are methyl and there is at least one amino alkoxylate pendant, though alternatively, the terminal groups may be amino alkoxylates and the pendant Q groups may all be methyl. A particularly preferred siloxane is a (CH₃)₃SiOSiCH₃(Q)OSi(CH₃)₃ wherein the Q is an amino alkoxylate.

Preferably a is such that there is a mixture of ethylene oxide (EO), propylene oxide (PO) units and butylene oxide (BO) units. Preferably, for aqueous applications, there is a preponderance of EO units, most preferably every a = 2. For non-aqueous applications, such as crop oil concentrates, there may be more PO and BO units. When Q contains a mixture of oxyalkylenes, it may be blocked or random. One skilled in the art will understand the advantages in the position of the oxyethylene relative to the oxypropylene, when the alkyleneoxide group is blocked.

T groups preferably are alkyls (which may be branched, linear or cyclic) of less than 8 carbons. Another preferred T is an alkyl amine functionality, -BNR²₂ which may be further substituted (e.g., with an alkyl) or be further alkoxylated, e.g., -BN(CₐH₂ₐO)_{c}R¹. Alternatively, T may be an amino alkyl siloxane or an amino alkyl hydroxy siloxane, e.g., -B-N-B-(SiO_{1/2}R⁶)-X¹ wherein X¹ is a siloxane per formula I above (with the -B-N-B-(SiO_{1/2}R⁶)-X¹ group being taken as [O_{½}MeSi(Q)O_{½}] or [O_{½}SiMe₂Q]) and R⁶ is O_{1/2} or -CH₃. If T contains a siloxane, it preferably is the same backbone as the siloxane to which Q is attached.

The Q groups may include protonated amines, *i.e*, where there is a hydrogen ion attached to the nitrogen in the Q group, which can occur to the aminosilicone alkoxylates under acidic conditions. Also contemplated herein are quaternary versions of Q, *i.e.*, where there is a third Tgroup on the nitrogen in Q, but said quaternary compounds are not preferred for use in the present invention since they would tend to be phytotoxic.

Preferred Q structures are wherein R⁴ is hydrogen or methyl, a is 2, and b is from 4 to 6. Specific Q groups are -C₂H₄N[C₂H₄O(EO)₅CH₃]₂; -C₂H₄N[C₂H₄O(EO)₅H]₂; -C₃H₆N[C₃H₆O(EO)₃(PO)₂H](C₂H₅);

Preferred aminosilicone alkoxylates are trisiloxanes with R⁵ being methyl, with B preferably being a C1 to C4 alkylene, most preferably propylene or 2-hydroxy propylene.

### PESTICIDES

The pesticidal compositions of the present invention also include at least one pesticide, especially acid functionalized ones, i.e., compounds that contain at least one carboxylic, sulfonic or phosphonic acid group or their salt or ester. The term pesticide means any compound used to destroy pests, e.g., rodenticides, fungicides, and herbicides. Illustrative examples of pesticides which can be employed include, but are not limited to, growth regulators, photosynthesis inhibitors, pigment inhibitors, mitotic disrupters, lipid biosynthesis inhibitors, cell wall inhibitors, and cell membrane disrupters. The amount of pesticide employed in compositions of the invention varies with the type of pesticide employed. More specific examples of pesticide compounds that can be used with the compositions of the invention are: phenoxy acetic acids, phenoxy propionic acids, phenoxy butyric acids, benzoic acids, triazines and s-triazines, substituted ureas, uracils, bentazon, desmedipham, methazole, phenmedipham, pyridate, amitrole, clomazone, fluridone, norflurazone, dinitroanilines, isopropalin, oryzalin, pendimethalin, prodiamine, trifluralin, glyphosate, sulfonylureas, imidazolinones, clethodim, diclofop-methyl, fenoxaprop-ethyl, fluazifop-p-butyl, haloxyfop-methyl, quizalofop, sethoxydim, dichlobenil, isoxaben, and bipyridylium compounds.

The pesticide may be a liquid or a solid. If a solid, it is preferable that it it is soluble in a solvent prior to application, and the silicone may act as a surfactant for such solubility or additional surfactants may perform this function.

It is preferable that the pesticide be one that is other than a solvent. For example, it is preferable that the pesticide do not include solvents which have also at times been categorized as being pesticidally active compounds. Such solvents include paraffinics; oils including animal, mineral, vegetable, silicone, and so forth; fatty acids, esters, and amides of fatty acids; alkanes; ketones; alcohols; glycols; alkyl/aryl alkoxylates; diols; acetates.

### EXCIPIENTS

Buffers, preservatives and other standard excipients known in the art also may be included in the composition. When the compositions of the present are insoluble in distilled water, spreading may be achieved by the addition of a small amount of an acid, such as acetic acid, to protonate the amine functionality, thereby increasing water solubility.

Solvents may also be included in compositions of the present invention. These solvents are in a liquid state at room temperature. Examples include water, alcohols, aromatic solvents, oils (i.e. mineral oil, vegetable oil, silicone oil, and so forth), lower alkyl esters of vegetable oils, fatty acids, ketones, glycols, polyethylene glycols, diols, paraffinics. Particular solvents would be 2, 2, 4-trimethyl, 1-3-pentane diol and alkoxylated (especially ethoxylated) versions thereof, See US Patent No. 5,674,832 to Keyes, or n-methyl-pyrrilidone.

Moreover, other cosurfactants, which have short chain hydrophobes which do not interfere with superspreading may be included. See US Patent No. 5,558,806 to Policello et al.

The cosurfactants useful herein include nonionic, cationic, anionic, amphoteric, zwitterionic, polymeric surfactants, or any mixture thereof. Surfactants are typically hydrocarbon based, silicone based or fluorocarbon based.

Useful surfactants include alkoxylates, especially ethoxylates, containing block copolymers including copolymers of ethylene oxide, propylene oxide, butylene oxide, and mixtures thereof; alkylarylalkoxylates, especially ethoxylates or propoxylates and their derivatives including alkyl phenol ethoxylate; arylarylalkoxylates, especially ethoxylates or propoxylates. and their derivatives; amine alkoxylates, especially amine ethoxylates; fatty acid alkoxylates; fatty alcohol alkoxylates; alkyl sulfonates; alkyl benzene and alkyl naphthalene sulfonates; sulfated fatty alcohols, amines or acid amides; acid esters of sodium isethionate; esters of sodium sulfosuccinate; sulfated or sulfonated fatty acid esters; petroleum sulfonates; N-acyl sarcosinates; alkyl polyglycosides; alkyl ethoxylated amines.

Specific examples include alkyl acetylenic diols (SURFONYL- Air Products), pyrrilodone based surfactants (e.g., SURFADONE - LP 100 - ISP), 2-ethyl hexyl sulfate, isodecyl alcohol ethoxylates (e.g., RHODASURF DA 530 - Rhodia), ethylene diamine alkoxylates (TETRONICS - BASF), and ethylene oxide/propylene oxide copolymers (PLURONICS - BASF) and Gemini type surfactants (Rhodia).

Preferred surfactants include ethylene oxide/propylene oxide copolymers (EO/PO); amine ethoxylates; sorbitol ethoxylates. The optional silicone surfactants include trisiloxane alkoxylates (TSAs) of the general formula:

R⁶Me₂SiO[MeSi(X)O]ySiMe₂R⁶

wherein y = 0 to 2, preferably 1, X is as above, and R⁶ is G, or an alkyl of one to four carbons. The preferred nonionic siloxane alkoxylates are trisiloxane alkoxylates, where y = 1, a = 3, q = 4 to 8, r = 0, R⁶ is Me, R³ is H or Me.

A suspension aid is preferably utilized if a pesticide concentrates is made with the modified siloxanes to improve physical stability.

### MANUFACTURE OF SILOXANES

The amine modified organosiloxanes of the present invention may be made by the hydrosilation of a hydridosiloxane with an epoxy intermediate, such as allyl glycidal ether, vinyl cyclohexene monoxide, or an epoxy terminated allyl polyalkyleneoxide, followed by ring opening the epoxide with the appropriate amino alkoxylate group. The hydridosiloxanes described are commercially available and may be made as known in the art. Hydrosilation conditions depend on the reactants, but are within the general conditions taught in Marciniec *(Comprehensive Handbook of Hydrosilylation,* Edited by Bogdan Marciniec, Pergamon Press).

Epoxy terminated, allyl polyethyleneoxide can be prepared by the method outlined by Xue-Ping Gu, *et al,* (Synthesis of Glycol Diglycidyl Ethers Using Phase-Transfer Catalysis; in *Synthesis Communications June*/*July 1985*, p. 649-651) from an epoxide and commercially available allyl started polyalkylene oxides.

Amino alkoxylates which are to be reacted with the epoxide may be terminated with an alkyl or hydroxyl or may be terminated with an amine, so that the alkoxylate is a diamine. Such diamines are available under the tradename JEFFAMINE. In such a case the diamine would crosslink many of the siloxanes, thus, it is preferable to use with diamines siloxanes with only one epoxy functionality per molecule. The resulting product would be two siloxane chains linked by an amino alkoxylate amino bridge. Short chain siloxanes, e.g., trisiloxanes would be preferable for same.

Alternatively to make the amine modified siloxanes one may start from the reaction product of an allyl or methallyl chloride and an alkoxylated amine compound and hydrosilate this allylic polyhydric amine onto hydridosiloxanes. Hydrosilation conditions depend on the amine and siloxane, but again are within the general conditions taught in Marciniec.

If a siloxane is a terpolymer, i.e., has two different functionalities hydrosilated onto the backbone (e.g., an amino alkoxylate, polyether siloxane) such hydrosilations may be done sequentially or at the same time depending upon the reactivities of the species to be hydrosilated, as well as the desired end-product. The reaction conditions for hydrosilating an allyl started polyether are well known in the art.

The alkenylamino polyalkyleneoxides intermediate structures to be reacted with the hydridosiloxanes are of the formula B'N[BO(CₐH₂ₐO)_{b}R¹]_{2-z}T_{z} wherein all formulae as are above, except B' is an alkenyl, with an α,β unsaturation at the end of the alkenyl opposite from the nitrogen atom. The alkenyl could be up to C18, preferably up to C6, and most preferably allyl or methallyl. To make this alkenyl amine alkoxylate, an alkenyl salt, e.g., allyl bromide, is reacted with ammonia, or a secondary or primary amine. This amine product then is alkoxylated.

An exemplary alkoxylation procedure would be as follows (with chemistry noted below)- Charge allyl amine to reactor. Degas and pressurize with nitrogen. Heat to 105°C, and then add 1.7 x 10⁵ Pa (25 psig) of nitrogen above the pressure exerted by allyl amine. Gradually add EO, to maintain temperature below 115°C, and pressure below 5.5 x 10⁵ Pa (80 psig). The formation of the tertiary amine will cause a great drop in the reactor pressure, at this time continual addition of EO could proceed at 105-110°C and a pressure range of 4.1 x 10⁵ Pa to 5.5 x 10⁵ Pa (60 to 80 psig).

After the required amounts of EO is added, the reaction is allowed to digest for 30 minutes, residual EO is removed by vacuum, the reactor is cooled, and the product removed by slight pressurization of the reactor.

Any glycol's which may have been produced due to utilization of a partially wet amine may be stripped by vacuum.

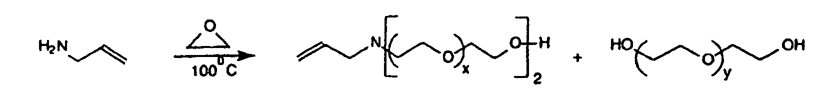

The allyl amino polyalkyleneoxides also may be prepared by reaction of an allyl glycidyl ether (or similar unsaturated epoxide) with an amine alkoxylate (which result in an ether bond). If a diamine is used for such a reaction, a diallylic speices will be formed, which will act as a crosslinker and prefereably should be used with a mon-hydridosiloxane. An alternative method using aziridine, which is not preferred for toxicity reasons, is disclosed in WO 97/32475.

The nonionic siloxane and the pesticides are commercially available and their manufacture is known in the art.

### USE

The modified organosiloxanes may be used in agricultural applications as adjuvants for pesticides wherein the siloxane is applied in a pesticide formulation to agricultural products or to treat animals. The composition of the present invention is useful as a tank side additive in an animal shampoo, or as a component in a herbicide formulation. In addition the compositions of the present invention are useful as adjuvants for other pesticides, such as, fungicides, insecticides, plant growth regulators, acaracides and the like. The pesticide formulations may be wet, dry, slurries or other formulations as are known in the art.

The siloxanes are added directly to a spray tank along with an acid functional pesticide, or as part of a pesticide formulation. When used as a tankside additive, the siloxane is present at weight concentrations between 0.001% and 5.0%, preferably between 0.025% and 0.5%. Likewise, when the modified organosiloxanes are used in a pesticide formulation (In-can), they are present at weight concentrations that will deliver between 0.001% and 5.0% to the final use dilution, preferably between 0.025% and 0.5%, of the final use dilution.

It is noted that most dilutions will be made with water, but in the case of crop oil concentrates, oils (mineral, silicone, animal or vegetable oils) will be the diluents.

When the compositions of the present invention are used in conjunction with a TSA, the weight ratio of the TSA to the modified organosiloxanes is between 5:95 and 95:5, preferably between 5:95 and 40:60. The blend may be accomplished by mixing physically the two components prior to use, or by adding them separately to a spray mixture at the point of use.

When the compositions of the present invention are used in conjunction with nonsilicone surfactants, the weight ratio of the nonsilicone surfactant to the modified organosiloxane is between 1:99 and 99:1, preferably between 99:1 and 40:60.

Additionally, the amino alkoxylate organosiloxanes also may be used generally as surface active agents in aqueous formulation where there is an acid functionalized component. These organosiloxanes also may be used as surface active agents, including, but not limited to, as surfactants, wetting agents and softeners for textiles, flow and leveling agents in coatings, hair care products, skin care and creams for personal care applications and anti-static agents, detergents and softeners for laundry products.

### Examples

Unless otherwise indicated, all parts and percentages are by weight, and are based on the weight at the particular stage of the processing being described.

### Example 1 - Alkoxylation of Allyl Amine

To a two liter Parr pressure reactor was charged 200.4 g of allyl mine.
The reactor was heated to 60°C, which resulted in a pressure of 6.8 x 10⁴ Pa (10 psig). To the system was added 1.7 x 10⁵ Pa (25 psig) of nitrogen, and 50 g of EO. The reactor was heated gradually until an exotherm was noticed. This occurred at 103°C and caused a pressure jump to 7.24 x 10⁵ Pa (105 psig). After the reaction subsided the temperature was kept at 103 and more EO added between 2.8 x 10⁵ Pa to 4.1 x 10⁵ Pa (40 to 60 psig). After approximately 100 g was added another exotherm occurred to 130°C and caused a raise in pressure to 4.8 x 10⁵ Pa (70 psig). After this exotherm subsided the reaction behaved very well and continuous addition of EO was possible. Catalysis after the formation of a tertiary amine was not required for subsequent addition of EO. The temperature range of the reaction was 103 - 110°C, with a pressure of range of 2.8 x 10⁵ Pa to 3.1 x 10⁵ Pa (40 to 45 psig) (including 1.7 x 10⁵ Pa (25 psig) of Nitrogen), and a rate of addition of 20-25 g/min. of EO.

### Example 2

Aminosilicone alkoxylates were prepared by the slow addition of the desired allylamino polyalkyleneoxide to a reaction vessel containing heptamethyltrisiloxane (in a 1.3:1 mole ratio). Therefore, 25.7g of heptamethyltrisiloxane (0.1155 moles), 39.3g of allylamine ethoxylate, 4.6 EO, (0.1501 moles), along with 30 g isopropanol (solvent) were weighed into a 250 mL roundbottom flask equipped with an addition funnel, reflux condenser and an overhead stirrer. The flask contents were heated to 65°C and catalyzed with 0.3 g of potassium trichloro-ethylene platinate (III) solution (1% in isopropanol) and held at this temperature for 6 h. The reaction mixture was heated to 75°C, and an additional 0.56 g of catalyst solution was added. The reaction mixture was maintained at this temperature for an additional 5 hours at which time another 0.26 g of catalyst solution was added to the reaction mixture, and stirred for an additional hour. The reaction was monitored by introducing a sample of the reaction mixture into a fermentation tube containing KOH/water/ethanol solution. The generation of hydrogen indicates an incomplete reaction. The flask contents were mixed until the SiH intermediate was consumed. The mixture was cooled to 45 °C, filtered through a fine filter pad, and stripped on a Rotovap for 1.5 hours at 70°C and 1.0 mm Hg to yield a dark amber colored product with a viscosity of 78 cps (Spindle LV-3 @ 100 rpm), a refractive index of 1.4520 (25°C) and an aqueous surface tension of 21.1 mN/m (0.1 wt%, Wilhelmy Plate). The resulting aminosilicone alkoxylate is shown in Table 1.

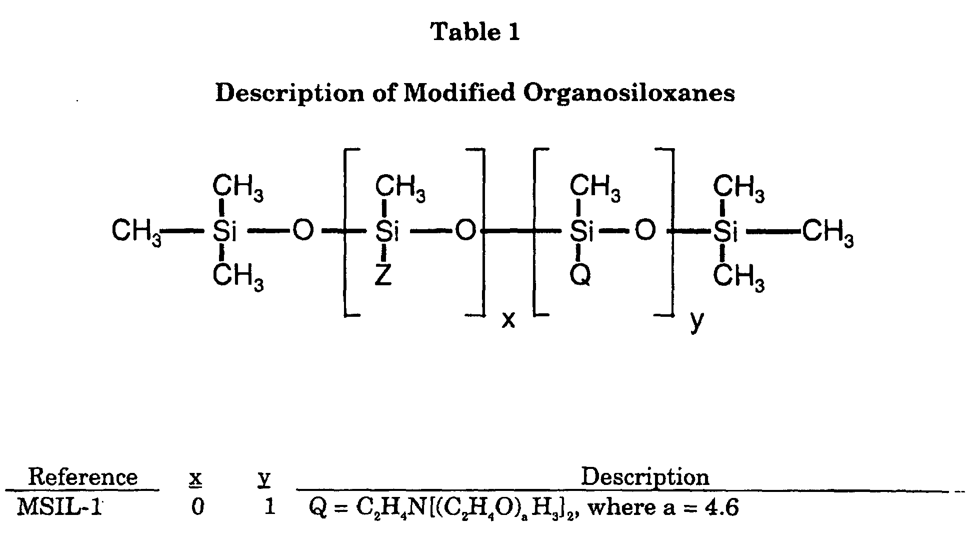

### Example 3

This example demonstrates the utility of the organosilicone composition of the present invention as a surfactant. Aqueous solutions of this siloxane provided a significant reduction in surface tension relative to water. Surface tension was measured using a Cahn microbalance, with a sand blasted platinum blade as the sensor. Solutions of the various components were prepared at 0.1 wt% in 0.005M NaCl water (Deionized), as an equilibrium aid.

Spreading was determined by applying a 10 µL droplet of surfactant solution to a polyester film (3M, IR 1140 transparency film) and measuring the spread diameter after 30 seconds. The solution was applied with an automatic pipette to provide droplets of reproducible volume. Deionized water that was further purified with a Millipore filtration system was used to prepare the surfactant solutions.

**Table 2 -**

| **Comparison of Aqueous Surface Tension Properties** | | | |
|---|---|---|---|
| Surfactant | Surface Tension (mN/m) | Spread Diameter (mm) | |
| | | 0.1 wt% | 0.2 wt% |
| MSIL-1 | 21.1 | 27 | 34 |
| a. Surface tension in mN/m at 25°C. | | | |
| b. Surface tension of water from CRC Handbook of Chemistry and Physics: 63 Edition, 1982-1983. | | | |
| * Spread diameter of distilled water = 4 mm | | | |

## Claims

1. A modified organosiloxane of the present invention having the average general formula:
[SiO_{4/2}]_{d}[MeSiO_{3/2}]_{c}[O_{½}MeSi(Q)O_{½}]_{f}[O_{½}SiMe2Q]_{g} (I)
wherein f is between 0 to 50, d = 0 to 2, e = 0 to 3, if the siloxane is not cyclic, g = 2 + e + 2d, if the siloxane is cyclic g = 0 and f ≥ 1, e+d+f+g = 2 to 50 if the siloxane is non-cyclic and = 4 to 8 if the siloxane is cyclic and Q is either an amino alkoxylate of the formula -BN[BO(CₐH₂ₐO)_{b}R¹]_{2-z}T_{z} or R², with at least one Q not being R², each a is 2 to 4, each b is 2 to 15, each B is a divalent bridging group of up to C8, each optionally OH substituted, z = 0 to 1, R¹ is hydrogen or a hydrocarbon radical of 1 to 4 carbons, R² is either a polyether of the structure -BO(CₐH₂ₐO)_{c}R¹, hydrogen or an alkyl radical containing 1 to 18 carbons, c = 0 to 15, and T is a univalent organic moiety.

2. A siloxane according to claim 1 wherein T is an alkyl (which may be branched, linear or cyclic) of less than 8 carbons, an alkyl amine functionality, -BNR¹₂, or B-N-B-(SiO_{1/2}R⁶)-X¹ wherein X¹ is a siloxane per formula I and R⁶ is O_{½} or -CH₃.

3. A siloxane according to claim 1 wherein f = 1 to 5, d = 0, e = 0 and g = 2.

4. A composition comprising a modified organosiloxane according to claim 1 and additionally comprising a pesticide.

5. A siloxane according to claim 3 wherein T is an alkyl and z = 1.

6. A process for applying a pesticide comprising applying to an animal or plant a composition comprising a modified organosiloxane having the average general formula :
[SiO_{½}]_{d}[MeSiO_{3/2}]ₑ[O_{½}MeSi(Q)O]_{f}[O_{½}SiMe₂Q]_{g} (I)
wherein f is between 0 to 50, d = 0 to 2, e = 0 to 3, if the siloxane is not cyclic, g = 2 + e + 2d, if the siloxane is cyclic, g = 0 and f ≥ 1, e+d+f+g = 2 to 50 if the siloxane is non-cyclic and = 4 to 8 if the siloxane is cyclic and Q is either an amino alkoxylate of the formula -BN[BO(CₐH₂ₐO)_{b}R¹]_{2-z}T_{z} or R², with at least one Q not being R², each a is 2 to 4, each b is 2 to 15, each B is a divalent bridging group of up to C8, each optionally OH substituted, z = 0 to 1, R¹ is hydrogen or a hydrocarbon radical of 1 to 4 carbons, R² is either a polyether of the structure -BO(CₐH₂ₐO)_{b}R¹, hydrogen or an alkyl radical containing 1 to 18 carbons and T is a univalent organic moiety.

7. A process according to claim 6 additionally comprising applying a cosurfactant.

8. A process according to claim 6 wherein f = 1 to 5, d = 0, e = 0 and g = 2 and T is an alkyl (which may be branched, linear or cyclic) of less than 8 carbons, an alkyl amine functionality, -BNR¹₂, or B-N-B-(SiO_{1/2}R⁶)-X¹ wherein X¹ is a siloxane per formula I and R⁶ is O_{1/2} or -CH₃.

9. An amine of the formula B'N[BO(CₐH₂ₐO)_{b}R¹]_{2-z}T_{z} wherein B' is an alkenyl of up to 8 carbon atoms with an α, β unsaturation at the end of the alkenyl opposite from the nitrogen atom, a = 2 to 4, b = 2 to 15, z = 0 to 1, B is a divalent bridging group of up to 8 carbon atoms, each optionally OH substituted, R¹ is hydrogen or a hydrocarbon radical of 1 to 4 carbons and T is an alkyl (which may be branched, linear or cyclic) of less than 8 carbon, and alkyl amine functionality, or -BNR¹₂.

10. An amine according to claim 9 wherein z = 0.

## Patentansprüche

1. Modifiziertes Organosiloxan der vorliegenden Erfindung mit der durchschnittlichen allgemeinen Formel:
[SiO_{4/2}]_{d}[MeSiO_{3/2}]ₑ[O_{1/2}MeSi(Q)O_{1/2}]_{f}[O_{1/2}SiMe₂Q]_{g} (I)
in der f zwischen 0 bis 50 ist, d = 0 bis 2, e = 0 bis 3, wenn das Siloxan nicht cyclisch ist, g = 2 + e + 2d, wenn das Siloxan cyclisch ist, g = 0 und f ≥ 1, e + d + f + g = 2 bis 50, wenn das Siloxan nicht cyclisch ist, und = 4 bis 8, wenn das Siloxan cyclisch ist, und Q entweder ein Aminoalkoxylat der Formel -BN[BO(CₐH₂ₐO)_{b}R¹]₂₋ₓTₓ oder R² ist, wobei mindestens ein Q nicht R² ist, jedes a für 2 bis 4 steht, jedes b für 2 bis 15 steht, jedes B eine zweiwertige Verbrückungsgruppe mit bis zu C8 ist, von denen jedes gegebenenfalls OH-substituiert ist, z = 0 bis 1, R¹ Wasserstoff oder ein Kohlenwasserstoffrest mit 1 bis 4 Kohlenstoffen ist, R² entweder ein Polyether der Struktur -BO(CₐH₂ₐO)_{c}R¹, Wasserstoff oder ein Alkylrest ist, der 1 bis 18 Kohlenstoffatome enthält, c = 0 bis 15 und T eine einwertige organische Einheit ist.

2. Siloxan nach Anspruch 1, in dem T ein Alkyl (das verzweigt, linear oder cyclisch sein kann) mit weniger als 8 Kohlenstoffen, eine Alkylamin-Funktionalität, -BNR¹₂ oder B-N-B-(SiO_{1/2}R⁶)-X¹ ist, worin X¹ ein Siloxan laut Formel I ist und R⁶ für O_{1/2} oder -CH₃ steht.

3. Siloxan nach Anspruch 1, in dem f = 1 bis 5, d = 0, e = 0 und g = 2.

4. Zusammensetzung, umfassend ein modifiziertes Organosiloxan nach Anspruch 1 und zusätzlich ein Pestizid umfassend.

5. Siloxan nach Anspruch 3, in dem T ein Alkyl ist und z = 1.

6. Verfahren zur Aufbringung eines Pestizids, umfassend das Aufbringen einer Zusammensetzung, die ein modifiziertes Organosiloxan mit der durchschnittlichen allgemeinen Formel:
[SiO_{4/2}]_{d}[MeSiO_{3/2}]ₑ[O_{1/2}MeSi(Q)O_{1/2}]_{f}[O_{1/2}SiMe₂Q]_{g} (I)
umfasst, in der f zwischen 0 bis 50 ist, d = 0 bis 2, e = 0 bis 3, wenn das Siloxan nicht cyclisch ist, g = 2 + e + 2d, wenn das Siloxan cyclisch ist, g = 0 und f ≥ 1, e + d + f + g = 2 bis 50, wenn das Siloxan nicht cyclisch ist, und = 4 bis 8, wenn das Siloxan cyclisch ist, und Q entweder ein Aminoalkoxylat der Formel -BN[BO(CₐH₂ₐO)_{b}R¹]₂₋ₓTₓ oder R² ist, wobei mindestens ein Q nicht R² ist, jedes a für 2 bis 4 steht, jedes b für 2 bis 15 steht, jedes B eine zweiwertige Verbrückungsgruppe mit bis zu C8 ist, von denen jedes gegebenenfalls OH-substituiert ist, z = 0 bis 1, R¹ Wasserstoff oder ein Kohlenwasserstoffrest mit 1 bis 4 Kohlenstoffen ist, R² entweder ein Polyether der Struktur -BO(CₐH₂ₐO)_{b}R¹, Wasserstoff oder ein Alkylrest ist, der 1 bis 18 Kohlenstoffe enthält, und T eine einwertige organische Einheit ist, auf ein Tier oder eine Pflanze.

7. Verfahren nach Anspruch 6, zusätzlich umfassend das Aufbringen eines Co-Tensids.

8. Verfahren nach Anspruch 6, in dem f = 1 bis 5, d = 0, e = 0 und g = 2 und T ein Alkyl (das verzweigt, linear oder cyclisch sein kann) mit weniger als 8 Kohlenstoffen, eine Alkylamin-Funktionalität, -BNR¹₂ oder B-N-B-(SiO_{1/2}R⁶)-X¹ ist, worin X¹ ein Siloxan laut Formel I ist und R⁶ für O_{1/2} oder -CH₃ steht.

9. Amin der Formel B'N[BO(CₐH₂ₐO)_{b}R¹]_{2-z}T_{z}, in der B' ein Alkenyl mit bis zu 8 Kohlenstoffatomen mit einer α,β-Unsättigung am zum Stickstoffatom entgegengesetzten Ende des Alkenyls ist, a = 2 bis 4, b = 2 bis 15, z = 0 bis 1, B eine zweiwertige Verbrückungsgruppe mit bis zu 8 Kohlenstoffatomen ist, von denen jedes gegebenenfalls OH-substituiert ist, R¹ Wasserstoff oder ein Kohlenwasserstoffrest mit 1 bis 4 Kohlenstoffen ist und T ein Alkyl (das verzweigt, linear oder cyclisch sein kann) mit weniger als 8 Kohlenstoffen, eine Alkylamin-Funktionalität oder -BNR¹₂ ist.

10. Amin nach Anspruch 9, in dem z = 0.

## Revendications

1. Organosiloxane modifié selon la présente invention répondant à la formule générale moyenne :
[SiO_{4/2}]_{d}[MeSiO_{3/2}]ₑ[O_{1/2}MeSi(Q)O_{1/2}]_{f}[O_{1/2}SiMe₂Q]_{g} (I)
dans laquelle f est compris entre 0 et 50, d = 0 à 2, e = 0 à 3, si le siloxane n'est pas cyclique, g = 2 + e + 2d, si le siloxane est cyclique g = 0 et f ≥ 1, e+d+f+g = 2 à 50 si le siloxane est non cyclique et = 4 de 8 si le siloxane est cyclique et Q est soit un amino-alkoxylate de formule -BN[BO(CₐH₂ₐO)_{b}R¹]_{2-z}T_{z} ou R², avec au moins un Q n'étant pas R², chacun étant compris de 2 à 4, chaque b de 2 à 15, chaque B est un groupe divalent formant un pont de jusqu'à C8, chacun étant substitué avec OH en option, z = 0 à 1, R¹ est l'hydrogène ou un radical hydrocarbure de 1 à 4 atomes de carbone, R² est soit un polyéther de structure -BO(CₐH₂ₐO)_{b}R¹, l'hydrogène ou un radical alkyle contenant de 1 à 18 atomes de carbone, c = 0 à 15 et T est une partie organique monovalente.

2. Siloxane selon la revendication 1, dans lequel T est un alkyle (qui peut être ramifié, linéaire ou cyclique) de moins de 8 atomes de carbone, une fonctionnalité alkylamine, -BNR¹₂, ou B-N-B-(SiO_{1/2}R⁶)-X¹ dans laquelle X¹ est un siloxane de formule 1 et R⁶ est O_{1/2} ou -CH₃.

3. Siloxane selon la revendication 1, dans laquelle f = 1 à 5, d = 0, e = 0 et g = 2.

4. Composition comprenant un organosiloxane modifié selon la revendication 1 et comprenant en plus un pesticide.

5. Siloxane selon la revendication 3, dans lequel T est un alkyle et z = 1.

6. Procédé pour l'application d'un pesticide comprenant l'application à un animal ou à un végétal d'une composition comprenant un organosiloxane de formule générale moyenne :
[SiO_{4/2}]_{d} [MeSiO_{3/2}]ₑ[O_{1/2}MeSi(Q)O_{1/2}]_{f}[O_{1/2}SiMe₂Q]_{g} (I)
dans laquelle f est compris entre 0 et 50, d = 0 à 2, e = 0 à 3, si le siloxane n'est pas cyclique, g = 2 + e + 2d, si le siloxane est cyclique, g = 0 et f ≥ 1, e+d+f+g = 2 à 50 si le siloxane est non cyclique et = 4 à 8 si le siloxane est cyclique et Q est soit un amino-alkoxylate de formule -BN[BO(CₐH₂ₐO)_{b}R¹]_{2-z}T_{z} ou R², avec au moins un Q n'étant pas R², chacun étant compris entre 2 et 4, chaque b entre 2 et 15, chaque B est un groupe divalent formant un pont de jusqu'à C8, chacun étant substitué avec OH en option, z = 0 à 1, R¹ est l'hydrogène ou un radical hydrocarbure de 1 à 4 atomes de carbone, R² est soit un polyéther de structure -BO(CₐH₂ₐO)_{b}R¹, l'hydrogène ou un radical alkyle contenant de 1 à 18 atomes de carbone et T est une partie organique monovalente.

7. Procédé selon la revendication 6, comprenant en plus l'application d'un co-tensioactif.

8. Procédé selon la revendication 6, dans lequel f = 1 à 5, d = 0, e = 0 et g = 2 et T est un alkyle (qui peut être ramifié, linéaire ou cyclique) de moins de 8 atomes de carbone, une fonctionnalité alkylamine, -BNR¹₂, ou B-N-B-(SiO_{1/}^{2R6})-X¹ dans laquelle X¹ est un siloxane de formule I et R⁶ est O_{1/2} ou -CH₃.

9. Amine de formule -B'N[BO(CₐH₂ₐO)_{b}R¹]_{2-z}T_{z} dans laquelle B' est un alkényle comprenant jusqu'à 8 atomes de carbone avec une insaturation α, β à l'extrémité de l'alkényle à l'opposé de l'atome d'azote, a = 2 à 4, b = 2 à 15, z = 0 à 1, B est un groupe divalent formant un pont comprenant jusqu'à 8 atomes de carbone, chacun étant substitué avec OH en option, R1 est l'hydrogène ou un radical hydrocarbure de 1 à 4 atomes de carbone et T est un alkyle (qui peut être ramifié, linéaire ou cyclique) de moins de 8 atomes de carbone, une fonctionnalité alkylamine, ou -BNR¹₂.

10. Amine selon la revendication 9, dans laquelle z = 0.
